# EUROPÄISCHE PATENTSCHRIFT

(11) **EP 4 249 291 B1**
(45) Veröffentlichungstag und Bekanntmachung des Hinweises auf die Patenterteilung: **09.04.2025**
(21) Anmeldenummer: 23155085.6
(22) Anmeldetag: 06.02.2023
(51) Int. Cl.: B60C 13/00

(54) **FAHRZEUGREIFEN**
VEHICLE TYRE
BANDAGE PNEUMATIQUE POUR VÉHICULES

(30) Priorität: 24.03.2022 DE 102022202881
(43) Veröffentlichungstag der Anmeldung: 27.09.2023
(73) Patentinhaber: Continental Reifen Deutschland GmbH, 30175 Hannover (DE)
(72) Erfinder: Rittweger, Stefan, 30165 Hannover (DE)
(74) Vertreter: Continental Corporation

(56) Entgegenhaltungen:
- WO-A1-2018/192803
- WO-A1-2021/261553
- DE-A1- 102012 104 890
- JP-A- 2011 116 306
- JP-A- 2014 136 487

## Beschreibung

Die Erfindung betrifft einen Fahrzeugreifen mit einem dekorativen Muster auf zumindest einem Seitenwandabschnitt, wobei das Muster eine Vielzahl von Flächenelementen aufweist, wobei Flächenelemente vorhanden sind, die mit einer Schraffur aus Rippen versehen sind, und wobei Flächenelemente vorgesehen sind, deren Schraffur relativ zu einer bestimmten Richtung eine bestimmte Orientierung aufweist, die sich von der Orientierung der Schraffur anderer Flächenelemente, ebenfalls relativ zu dieser Richtung, unterscheidet, wobei das Muster eine Gitterstruktur aus Gitterlinien aufweist, die Flächenelemente umlaufen, welche in Umfangsrichtung des Seitenwandabschnittes durch eine insbesondere kontinuierliche Vergrößerung und/oder Verkleinerung der gegenseitigen Abstände von Gitterlinien und/oder unter Änderung des Verlaufes und/oder der Orientierung von Gitterlinien bezüglich der Umfangsrichtung und/oder der radialen Richtung ihre äußere Gestalt ändern.

Ein derartiger Fahrzeugreifen ist beispielsweise aus der DE 10 2012 104 890 A1 bekannt. Dieser Fahrzeugreifen weist auf einem Seitenwandabschnitt ein dekoratives Muster auf, welches aus benachbart nebeneinander angeordneten Flächenelementen gebildet ist, wobei die Flächenelemente je eine Schraffur aus parallelen Rippen aufweisen. Die zwischen den Rippen liegenden Aussparungen weisen in einem Überlappungsbereich, welcher wenigstens Teilbereiche von zwei benachbarten Flächenelementen umfasst, zur Erzeugung eines Wechselbild-Effekts eine definierte andere Tiefe als die Aussparungen außerhalb des Überlappungsbereichs auf. Gemäß einer Ausführung weist das Muster eine Gitterstruktur auf, welche ein wehendes Rennflaggenmotiv simuliert, sodass sich die gegenseitigen Abstände der Gitterlinien vergrößern und verkleinern und der Verlauf sowie die Orientierung der Gitterlinien ändert. Das Muster soll dem Fahrzeugreifen eine hochqualitative Anmutung und eine hohe Fertigungsqualität verleihen und zudem optische Mängel kaschieren.

Aus der WO 2021 261 553 A1 ist ein weiterer Fahrzeugreifen bekannt, welcher auf einem Seitenwandabschnitt ein dekoratives Musters aufweist, dass aus benachbart nebeneinander angeordneten, parallelogrammförmigen Flächenelementen mit je einer Schraffur aus parallelen Rippen gebildet ist. Je drei benachbarte Flächenelemente, in welchen die Rippen verschieden orientiert sind, simulieren einen Würfel.

Aus der JP 2011 116 306 A ist ein weiterer Fahrzeugreifen mit einem Seitenwandabschnitt mit einem dekorativen Muster bekannt. Das dekorative Muster ist aus ersten und zweiten langgestreckten Flächenelementen mit je einer Schraffur aus in Längserstreckung der Flächenelemente ausgerichteten Rippen gebildet, wobei die Rippen der ersten Flächenelemente um 90° gedreht zu den Rippen der zweiten Flächenelemente orientiert sind. Jedes erste Flächenelemente ist von vier zweiten Flächenelementen umgeben.

Aus der EP 2 842 766 B1 ist ein Fahrzeugreifen bekannt, welcher ein dekoratives Seitenwandmuster mit einer Vielzahl von nebeneinander, insbesondere parallel zueinander, verlaufenden Rippen aufweist, die eine Basisschraffur bilden. Aus der Basisschraffur stammende Rippen sind unter übereinstimmend großen Winkeln abgelenkt und bilden derartig örtlich begrenzt Schraffurflächen aus, welche dreidimensionale Formen bzw. Körper simulieren, welche die Basisschraffur unterbrechen. Dabei ist es möglich, eine Vielzahl dreidimensionaler Geometrien bzw. dreidimensionaler Körper nachzubilden bzw. vorzutäuschen.

Der Erfindung liegt die Aufgabe zugrunde, ein Seitenwandmuster zur Verfügung zu stellen, welches über eine wesentlich größere Fläche dreidimensional, insbesondere räumlich bzw. plastisch wirkenden Strukturen aufweist.

Gelöst wird die gestellte Aufgabe erfindungsgemäß dadurch, dass die Gitterlinien von Rippen gebildet sind, wobei sämtliche der die Schraffuren oder die Gitterlinien bildenden Rippen von einem gemeinsamen Basisniveau ausgehen.

Gemäß der Erfindung gestaltete Muster können sich unter Vermittlung einer dreidimensionalen räumlichen Gestaltung über einen beliebig großen Umfangsabschnitt der Seitenwand erstrecken. Die Gitterstruktur bietet dabei eine Vielzahl von Möglichkeiten, durch Variation der gegenseitigen Abstände von Gitterlinien und durch Variation bzw. Änderung ihrer Orientierung, Flächenelemente zu verkleinern oder zu vergrößern, sodass ein auf besonders auffallende Weise dreidimensional wirkendes Musters erzeugt werden kann.

Bei einer bevorzugten Ausführung sind die Flächenelemente der Gitterstruktur regelmäßige und/oder unregelmäßige, gerade oder gebogen verlaufende Seiten aufweisende Vielecke mit mindestens drei Ecken, insbesondere Vielecke mit drei bis vierzehn, vorzugweise mit bis zu acht Ecken. Die Gitterstruktur des Musters kann sich daher nahezu beliebig und sehr variabel, beispielsweise in Umfangsrichtung des Seitenwandabschnittes ändern, sodass beispielsweise eine Gitterstruktur aus Vierecken in eine Gitterstruktur aus Dreiecken übergeht, wobei zusätzlich durch schraffierte und unschraffierte Flächenelemente eine besonders auffallende, räumliche bzw. dreidimensionale Gestaltung des Musters erzielbar ist.

Bei einer weiteren bevorzugten Ausführung des Musters ist vorgesehen, dass die Gitterstruktur über zumindest einen Teil der Umfangserstreckung des Seitenwandabschnittes ein flächenbedeckendes Muster bildet, welches vorzugsweise aus viereckigen Flächenelementen besteht, welche Parallelogramme, wie Rechtecke oder rechteckähnliche Vierecke, oder Rhomben oder rhombenähnliche Vierecke sind.

Bei einer bevorzugten Weiterentwicklung der letztgenannten Ausführung, bei welcher sich das Muster in Umfangsrichtung des Seitenwandabschnittes weiterentwickelt und ändert, ist vorgesehen, dass die Gitterstruktur über zumindest einen Abschnitt der Umfangserstreckung des flächenbedeckenden Musters ein Basismuster bildet, welches zumindest aus ersten und aus zweiten Flächenelementen besteht, wobei die ersten Flächenelemente untereinander jeweils gleich gestaltet sind und wobei die zweiten Flächenelemente untereinander jeweils gleich gestaltet sind.

Dabei kann bereits das Basismuster eine Dreidimensionalität simulieren, beispielsweise indem es sich aus den ersten, den zweiten und dritten Flächenelementen zusammensetzt, welche untereinander jeweils gleich gestaltete und gleich große Parallelogramme sind, wobei je ein erstes, ein zweites und ein drittes Flächenelement durch ihre gegenseitige Anordnung eine in die Ebene projizierte Schrägansicht eines Quaders ergeben. Das Basismuster besteht daher aus einer großen Anzahl von Schrägansichten von Quadern.

Die "plastische" Gestaltung des Musters mit ersten, zweiten und dritten Flächenelementen wird zusätzlich dadurch betont, dass diese Flächenelemente mit Schraffuren versehen sind, die innerhalb der ersten, zweiten und dritten Flächenelemente weitgehend übereinstimmen bzw. gleich sind, sich jedoch hinsichtlich der Orientierung der die Schraffuren bildenden Rippen voneinander unterscheiden.

Die erwähnte Weiterentwicklung/Änderung des Basismusters kann auf besonders auffallende Weise Licht- und Schatteneffekte erzeugen, wenn sich das flächenbedeckende Muster ausgehend vom Basismuster in der Umfangserstreckung des Seitenwandabschnittes derart kontinuierlich verändert, dass die Flächenelemente entlang von schräg über den Seitenwandabschnitt verlaufenden Bögen in radialer Richtung verschmälert sind, wobei das flächenbedeckende Muster ausgehend vom radial inneren Rand des Seitenwandabschnittes zur Bedeckung dieses Seitenwandabschnittes entsprechend ergänzt ist.

Ein auf besondere Weise dreidimensional wirkendes Muster lässt sich mit einer Gitterstruktur erzielen, die eine netzartige Struktur ist und unregelmäßig wellenförmig verlaufende Gitterlinien aufweist, derart, dass ein insgesamt wellenförmig verlaufendes Muster vorliegt, welches ein wehendes Tuch oder eine wehende Fahne simuliert. Besonders deutlich ist dieser Effekt, wenn die Flächenelemente der netzartigen Gitterstruktur Vierecke sind, die schachbrettartig mit Schraffuren versehen sind, deren Rippen unterschiedliche Orientierungen aufweisen.

Nachdem die Gitterstruktur das Muster vorrangig prägt, ist es von Vorteil, wenn die Rippen, welche die Gitterlinien der Gitterstruktur bilden, auffallender sind als die Rippen der Schraffuren. Die Rippen, welche die Gitterlinien der Gitterstruktur bilden, sind daher bevorzugt derart ausgeführt, dass sie einen im Wesentlichen dreieckigen Querschnitt mit Spitzenbereichen mit einer Breite von 0,10 mm bis 0,25 mm, ferner seitliche Flanken, die unter einem Winkel von 20° bis 40°, insbesondere 25° bis 35°, relativ zu einer Senkrechten zum Basisniveau verlaufen, und eine Höhe, die 0,35 mm bis 0,45 mm, insbesondere 0,40 mm, beträgt, aufweisen.

Weitere, besonders auffallende Licht-Schatteneffekte lassen sich dadurch erzielen, dass Flächenelemente mit Schraffuren vorgesehen sind, deren Rippen ausgehend vom Basisniveau eine Höhe aufweisen, die 0,25 mm bis 0,35 mm beträgt und um bis zu 0,15 mm geringer ist als die Höhe der die Gitterlinien der Gitterstruktur bildenden Rippen und welche seitliche Rippenflanken aufweisen, die mit einer Senkrechten zum Basisniveau einen Winkel einschließen, welcher 20° bis 30° beträgt.

Andere Flächenelemente im Muster können mit einer anderen Schraffur versehen sein, insbesondere mit einer Schraffur aus Rippen, die ausgehend vom Basisniveau eine Höhe aufweisen, die 0,15 mm bis 0,30 mm beträgt und um bis zu 0,20 mm geringer ist als die Höhe der die Gitterlinien bildenden Rippen und die seitliche Rippenflanken aufweisen, die mit einer Senkrechten zum Basisniveau einen Winkel einschließen, welcher 40° bis 50° beträgt.

Vorzugsweise weisen die Rippen der Schraffuren der Flächenelemente Spitzenbereiche auf, deren Breite in der Größenordnung von 0,10 mm beträgt. Das Muster weist ferner, insbesondere innerhalb des Basismusters, Flächenelemente auf, welche mit Schraffuren aus Rippen versehen sind, die am Basisniveau einen gegenseitigen Abstand aufweisen, welcher in der Größenordnung von 0,10 mm beträgt, wobei in weiteren Flächenelementen, welche durch Vergrößerung und/oder Verkleinerung der gegenseitige Abstände von Gitterlinien eine geänderte äußere Gestalt aufweisen, der gegenseitige Abstand entsprechend geringer oder größer ist.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Umfangsabschnitt einer mit einem Muster versehenen Seitenwand eines Fahrzeugreifens,
Fig. 2 einen Umfangsabschnitt des Musters aus Fig. 1,
Fig. 2a das Detail D aus Fig. 2,
Fig. 3 einen vergrößerten Schnitt entlang der Linie III-III der Fig. 2,
Fig. 4 einen vergrößerten Schnitt entlang der Linie IV-IV der Fig. 2,
Fig. 5 einen vergrößerten Schnitt entlang der Linie V-V der Fig. 2 und
Fig. 6 eine Draufsicht auf eine weitere Ausführungsform eines Musters.

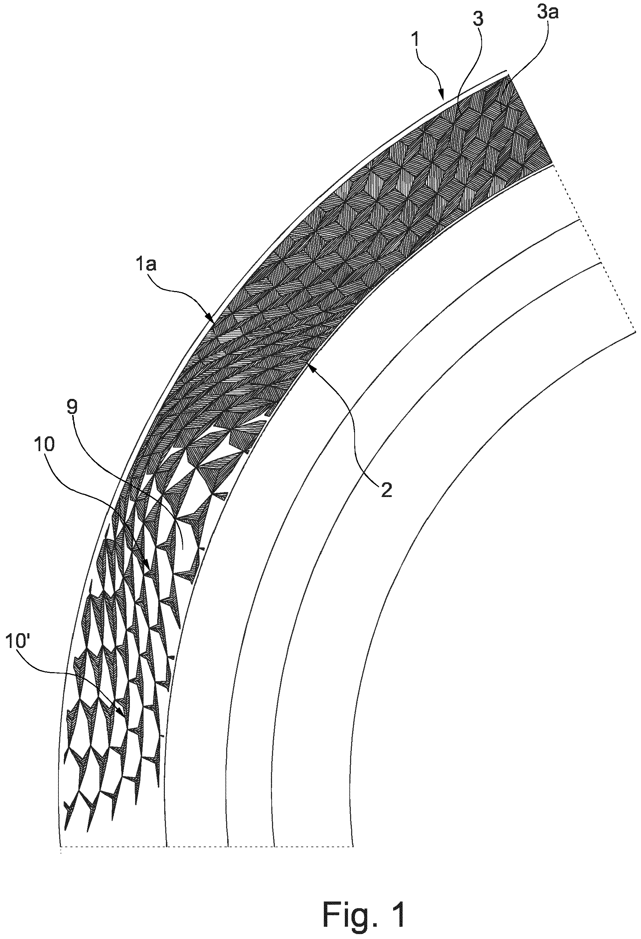

Fig. 1 zeigt eine in die Ebene projizierte Darstellung eines Umfangsabschnittes einer Seitenwand 1 eines Fahrzeugreifens, welcher ein Reifen beliebiger Bauart, insbesondere ein Radialreifen, und ferner ein Reifen beliebigen Typs, insbesondere ein Reifen für Personenkraftwagen, Light-Trucks oder Nutzfahrzeuge ist.

Der in Fig. 1 dargestellten Umfangsabschnitt der Seitenwand 1 enthält einen als Abschnitt eines Kreisringes gestalteten Seitenwandabschnitt 1a mit einem eingeprägten Muster 2. Der Seitenwandabschnitt 1a weist eine in radialer Richtung ermittelte Breite auf, die je nach Reifendimension in der Größenordnung von 1,00 cm bis 50,00 cm beträgt, und ist insbesondere ein Bestandteil eines die Seitenwand 1 kreisringförmig umlaufenden Gesamtdesigns, sodass das dargestellte Muster 2 an mehreren Stellen des Umfanges ausgebildet sein kann. Radial innerhalb des Seitenwandabschnittes 1a befinden sich üblicherweise glatte Seitenwandbereiche, welche vorzugsweise mit den Reifen kennzeichnenden Daten versehen sind.

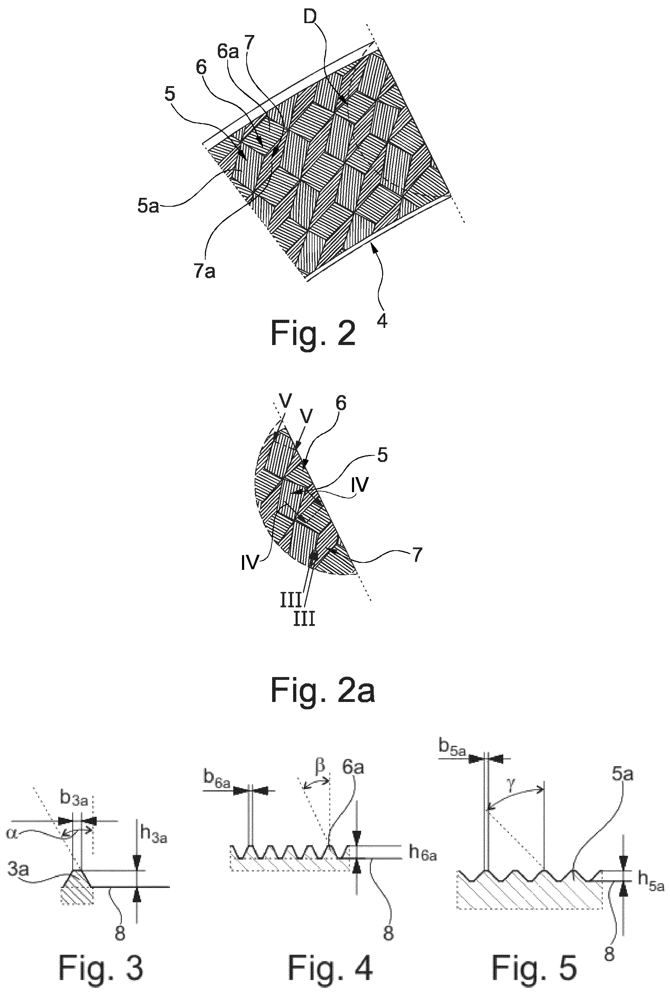

Wie insbesondere Fig. 1 zeigt, weist das Muster 2 einen flächenbedeckenden Bereich mit einer Gitterstruktur mit von Rippen 3a (Fig. 3) gebildeten Gitterlinien 3 auf, die viereckige schraffierte Flächenelemente 5, 6, 7 (Fig. 2) umlaufen. Das Muster 2 im flächenbedeckenden Bereich, welcher hauptsächlich oder ausschließlich aus schraffierte Flächenelementen besteht, ändert sich entlang der Umfangserstreckung des Seitenwandabschnittes 1a unter zunehmender Vergrößerung und/oder Verkleinerung der Abstände von Gitterlinien 3 und unter Änderung ihrer Orientierung bezüglich der Umfangsrichtung und/oder der radialen Richtung kontinuierlich, wobei schließlich der flächenbedeckende Bereich in einen Bereich übergeht, in welchem schraffierte Flächenelemente zumindest zum Teil durch glatte bzw. unschraffierte Flächenelemente 9 und schraffierte Flächenelemente 10, 10' ersetzt sind.

Die Kanten der Flächenelemente 5, 6 und 7 verlaufen entlang der von den Rippen 3a gebildeten Gitterlinien 3 und weisen eine Länge auf, die insbesondere 1,50 mm bis 10,00 mm beträgt, je nach der jeweiligen Gestalt. Entlang der in Umfangsrichtung der Seitenwand 1 kreisbogenförmig verlaufenden Ränder des Seitenwandabschnittes 1a sind entsprechend "abgeschnittene" Teile von Flächenelementen 5, 6 und 7 vorhanden.

Die Flächenelemente 5, 6 und 7 sind jeweils mit einer Schraffur aus einer Vielzahl von eng beabstandeten bzw. unmittelbar oder nahezu unmittelbar aneinander anschließenden, insbesondere jeweils parallel zueinander verlaufenden Rippen 5a (Flächenelemente 5), 6a (Flächenelemente 6) und 7a (Flächenelemente 7) versehen. Sämtliche Rippen 5a, 6a und 7a sowie die Rippen 3a entlang der Gitterlinien 3 gehen von einem Basisniveau 8 (Fig. 3 bis Fig. 5) aus, welches abgesehen von der leichten Wölbung der Seitenwand 1 eben ist. Die Schraffuren unterscheiden sich voneinander vor allem durch die Orientierung der Rippen 5a, 6a und 7a, beispielsweise indem in den Flächenelementen 5 und 7 die Rippen 5a, 7a parallel oder nahezu parallel zu den längeren Kanten und in den Flächenelementen 6 die Rippen 6a parallel oder nahezu parallel zu den kürzeren Kanten verlaufen.

Wie die Schnittdarstellung durch eine einzelne Rippe 3a in Fig. 3 zeigt, weisen die Rippen 3a einen im Wesentlichen dreieckigen Querschnitt mit Spitzenbereichen mit einer Breite b₃ₐ von 0,10 mm bis 0,25 mm, seitlichen Flanken, die unter einem Winkel α von 20° bis 40°, insbesondere von 25° bis 35°, relativ zu einer Senkrechten zum Basisniveau 8 verlaufen, und mit einer Höhe h₃ₐ, die 0,35 mm bis 0,45 mm, insbesondere 0,40 mm beträgt, auf.

Bei der in Fig. 1 und 2 gezeigten Ausführung weist das Muster 2 im flächenbedeckenden Bereich einen Umfangsabschnitt mit einem Basismuster 4 auf, in welchem die Flächenelemente 5, 6, 7 jeweils untereinander gleich gestaltet sind, jedoch jeweils unterschiedliche Parallelogrammformen aufweisen mit jeweils zwei längeren und zwei kürzeren Seiten. Die gegenseitige Anordnung der Flächenelemente 5, 6, 7 ergeben in die Ebene projizierte Schrägansichten von Quadern, die unmittelbar aneinander anschließen, sodass das Basismuster 4 3D-Ansichten von Quadern simuliert.

Fig. 4 und 5 zeigen Querschnitte von Rippen 5a und 6a aus Flächenelementen 5, 6 im Basismuster 4. Die Rippen 6a (Fig. 4) weisen ausgehend vom Basisniveau 8 eine Höhe h₆ₐ auf, die 0,25 mm bis 0,35 mm beträgt und um bis zu 0,15 mm geringer ist als die Höhe h₃ₐ der Rippen 3a. Sowohl die Breite b₆ₐ des Spitzenbereiches der Rippen 6a als auch ihr gegenseitiger Abstand am Basisniveau 8 beträgt in der Größenordnung von 0,10 mm. Der Winkel β, den die seitlichen Rippenflanken der Rippen 6a mit einer Senkrechten zum Basisniveau 8 einschließen, beträgt 20° bis 30° und ist um 3° bis 5° geringer als der Winkel α, den die Rippenflanken der Rippen 3a mit dem Basisniveau 8 einschließen.

Die Schnittdarstellung in Fig. 5 zeigt die Ausgestaltung und Anordnung der die Schraffur in den Flächenelementen 5 bildenden Rippen 5a im Basismuster 4. Vom Basisniveau 8 ausgehend beträgt die Höhe h₅ₐ der Rippen 5 0,15 mm bis 0,30 mm, insbesondere 0,25 mm, und ist insbesondere um bis zu 0,20 mm geringer als die Höhe h₃ₐ der Rippen 3a. Sowohl die Breite b₅ₐ des Spitzenbereiches der Rippen 5a als auch ihr gegenseitiger Abstand am Basisniveau 8 beträgt in der Größenordnung von 0,10 mm. Die Rippenflanken schließen mit einer Senkrechten zum Basisniveau 8 jeweils gleich große Winkel γ ein, die zwischen 40° bis 50°, insbesondere in der Größenordnung von 45°, betragen und um 10° bis 15° größer sind als der Winkel α der Rippenflanken der Rippen 3a.

Das Basismuster 4 ist über eine Umfangserstreckung von beispielsweise einigen Zentimetern des Seitenwandabschnittes 1a ausgebildet. Anschließend ändert sich das Muster 2 im flächenbedeckenden Bereich kontinuierlich, derart, dass die Flächenelemente 5, 6 und 7 entlang von schräg über die Seitenwand 1 verlaufenden Bögen in radialer Richtung verkleinert werden, wobei das Muster 2 ausgehend vom radial inneren Rand des Seitenwandabschnittes 1a ergänzt wird. Bei der gezeigten Ausführung erfolgt anschließend ein "Auflösen" des flächenbedeckenden Musters 2, indem glatte, unschraffierte Flächenelemente 9 anstelle von Teilen der Flächenelemente 5, 6 und 7 vorgesehen sind, derart, dass sternförmige und schließlich pfeilspitzenförmige schraffierte Flächenelemente 10, 10' entstehen, die von größeren glatten, also unschraffierten Flächenelementen 9 umgeben sind.

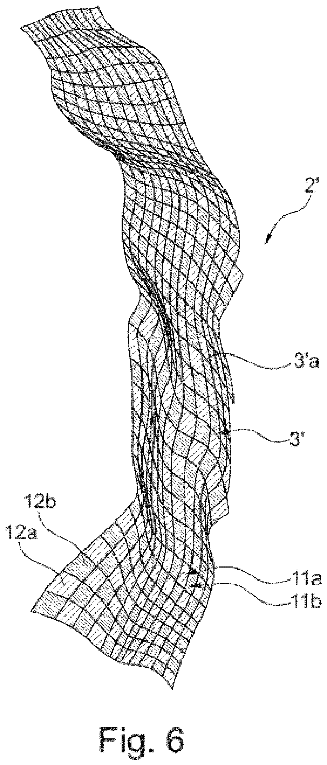

Fig. 6 zeigt einen Umfangsabschnitt einer weitere Ausführungsform eines Musters 2' mit einer Gitterstruktur mit von Rippen 3'a gebildeten Gitterlinien 3', die gitternetzähnlich verlaufen und derart Flächenelemente 11a, 11b umlaufen, die sämtlich Vierecke sind, insbesondere Parallelogramme, vorzugsweise Rechtecke oder ähnlich zu Rechtecken gestaltet sind. Die Gitterstruktur verändert sich über die Erstreckung des Musters 2' in Umfangsrichtung, in dem sich Gitterlinien 3', die in der Längserstreckung des Musters 2' verlaufen, teilweise einander annähern, an anderen Stellen voneinander etwas entfernen, sodass sich die Größen und die äußeren Gestalten der Flächenelemente 11a, 11b durch Vergrößerung und/oder Verkleinerung des gegenseitigen Abstandes der Gitterlinien 3' ändern. Gleichzeitig ändert sich auch der Verlauf von Gitterlinien 3' in Richtung einer Wellenform. Dabei wird ein insgesamt wellenförmiges Muster gebildet, welches ein wehendes Tuch oder eine wehende Fahne simuliert. Die Flächenelemente 11a, 11b des Musters 2' sind ferner schachbrettartig mit Schraffuren aus unterschiedlich orientierten Rippen 12a, 12b versehen, deren Anordnung und Orientierung sich mit der Änderung der Gitterlinien 3' entsprechend mitändern.

Die entlang der Gitterlinien 3' verlaufenden Rippen 3'a sind insbesondere analog zu den Rippen 3a der ersten Ausführungsform gestaltet, die in den Flächenelementen 11a und 11b verlaufenden Rippen 12a und 12b beispielsweise gemäß den Rippen 5a oder 6a der ersten Ausführungsform.

Bei weiteren, nicht gezeigten Ausführungsvarianten weist das Muster eine Gitterstruktur mit Flächenelementen auf, die beliebige regelmäßige oder unregelmäßige Vielecke mit mindestens drei Ecken und insbesondere bis zu vierzehn Ecken sind.

### Bezugszeichenliste

- 1: Seitenwand
- 1a: Seitenwandabschnitt
- 2, 2': Muster
- 3, 3': Gitterlinie
- 3a, 3'a: Rippe
- 4: Basismuster
- 5, 6, 7: Flächenelement
- 5a, 6a,: 7a.......Rippe
- 8: Basisniveau
- 9: unschraffiertes Flächenelement
- 10, 10': Flächenelement
- 11a, 11b: Flächenelement
- 12a, 12b: Rippe
- b₃ₐ, b₅ₐ, b₆ₐ: Breite
- h₃ₐ, h₅ₐ, h₆ₐ: Höhe
- α, β, γ: Winkel

## Patentansprüche

1. Fahrzeugreifen mit einem dekorativen Muster (2, 2') auf zumindest einem Seitenwandabschnitt (1a), wobei das Muster (2, 2') eine Vielzahl von Flächenelementen (5, 6, 7; 9, 10, 10'; 11a, 11b) aufweist, wobei Flächenelemente (5, 6, 7; 11a, 11b) vorhanden sind, die mit einer Schraffur aus Rippen (5a, 6a, 7a; 12a, 12b) versehen sind, und wobei Flächenelemente (5, 6, 7; 10, 10';11a, 11b) vorgesehen sind, deren Schraffur relativ zu einer bestimmten Richtung eine bestimmte Orientierung aufweist, die sich von der Orientierung der Schraffur anderer Flächenelemente (5, 6, 7; 11a, 11b), ebenfalls relativ zu dieser Richtung, unterscheidet, wobei das Muster (2, 2') eine Gitterstruktur aus Gitterlinien (3, 3') aufweist, die Flächenelemente (5, 6, 7; 9, 10, 10'; 11a, 11b) umlaufen, welche in Umfangsrichtung des Seitenwandabschnittes (1a) durch eine insbesondere kontinuierliche Vergrößerung und/oder Verkleinerung der gegenseitigen Abstände von Gitterlinien (3, 3') und/oder unter Änderung des Verlaufes und/oder der Orientierung von Gitterlinien (3, 3') bezüglich der Umfangsrichtung und/oder der radialen Richtung ihre äußere Gestalt ändern,
**dadurch gekennzeichnet,**
**dass** die Gitterlinien (3, 3') von Rippen (3a, 3'a) gebildet sind, wobei sämtliche der die Schraffuren oder die Gitterlinien (3, 3') bildenden Rippen (5a, 6a, 7a; 3a, 3'a; 12a, 12b) von einem gemeinsamen Basisniveau (8) ausgehen.

2. Fahrzeugreifen nach Anspruch 1, **dadurch gekennzeichnet, dass** die Flächenelemente (5, 6, 7; 9, 10, 10'; 11a, 11b) der Gitterstruktur regelmäßige und/oder unregelmäßige, gerade oder insgesamt gebogen verlaufende Seiten aufweisende Vielecke mit mindestens drei Ecken sind, insbesondere Vielecke mit drei bis vierzehn, vorzugsweise mit bis zu acht Ecken, sind.

3. Fahrzeugreifen nach Anspruch 1 oder 2, **dadurch gekennzeichnet, dass** die Gitterstruktur über zumindest einen Teil der Umfangserstreckung des Seitenwandabschnittes (1a) ein flächenbedeckendes Muster (2, 2') bildet, welches vorzugsweise aus viereckigen Flächenelementen (5, 6, 7; 11a, 11b) besteht, welche Parallelogramme, wie Rechtecke oder Rechteck ähnliche Vierecke, oder Rhomben oder Rhomben ähnliche Vierecke sind.

4. Fahrzeugreifen nach Anspruch 3, **dadurch gekennzeichnet, dass** die Gitterstruktur über zumindest einen Abschnitt der Umfangserstreckung des flächenbedeckenden Musters (2) ein Basismuster (4) bildet, welches zumindest aus ersten und aus zweiten Flächenelementen (5, 6, 7) besteht, wobei die ersten Flächenelemente (5, 6, 7) untereinander jeweils gleich gestaltet sind und wobei die zweiten Flächenelemente (5, 6, 7) untereinander jeweils gleich gestaltet sind.

5. Fahrzeugreifen nach Anspruch 4, **dadurch gekennzeichnet, dass** sich das Basismuster (4) aus den ersten, den zweiten und dritten Flächenelementen (5, 6, 7) zusammensetzt, welche untereinander jeweils gleich gestaltete und gleich große Parallelogramme sind, wobei je ein erstes, ein zweites und ein drittes Flächenelement (5, 6, 7) durch ihre gegenseitige Anordnung eine in die Ebene projizierte Schrägansicht eines Quaders ergeben.

6. Fahrzeugreifen nach Anspruch 5, **dadurch gekennzeichnet, dass** die ersten, zweiten und dritten Flächenelemente (5, 6, 7) mit Schraffuren versehen sind, die innerhalb der ersten, zweiten und dritten Flächenelemente (5, 6, 7) weitgehend übereinstimmen bzw. gleich sind, sich jedoch hinsichtlich der Orientierung der die Schraffuren bildenden Rippen (5a, 6a, 7a) voneinander unterscheiden.

7. Fahrzeugreifen nach einem der Ansprüche 4 bis 6, **dadurch gekennzeichnet, dass** sich das flächenbedeckende Muster (2) ausgehend vom Basismuster (4) in der Umfangserstreckung des Seitenwandabschnittes (1a) derart kontinuierlich verändert, dass die Flächenelemente (5, 6, 7) entlang von schräg über den Seitenwandabschnitt (1a) verlaufenden Bögen in radialer Richtung verschmälert sind, wobei das flächenbedeckende Muster (2) ausgehend vom radial inneren Rand des Seitenwandabschnittes (1a) zur Bedeckung des Seitenwandabschnittes (1a) entsprechend ergänzt ist.

8. Fahrzeugreifen nach einem oder mehreren der Ansprüche 1 bis 3, **dadurch gekennzeichnet, dass** die Gitterstruktur eine netzartige Struktur ist und unregelmäßig wellenförmig verlaufende Gitterlinien (3') aufweist, derart, dass ein insgesamt wellenförmig verlaufendes Muster (2') vorliegt, welches ein wehendes Tuch oder eine wehende Fahne simuliert.

9. Fahrzeugreifen nach Anspruch 8, **dadurch gekennzeichnet, dass** die Flächenelemente (11a, 11b) in der netzartigen Gitterstruktur Vielecke, insbesondere Vierecke, sind, die schachbrettartig mit Schraffuren versehen sind, deren Rippen (12a, 12b) unterschiedliche Orientierungen aufweisen.

10. Fahrzeugreifen nach einem oder mehreren der Ansprüche 1 bis 9, **dadurch gekennzeichnet, dass** die Rippen (3a, 3'a), welche die Gitterlinien (3, 3') der Gitterstruktur bilden, einen im Wesentlichen dreieckigen Querschnitt mit Spitzenbereichen mit einer Breite (b₃ₐ) von 0,10 mm bis 0,25 mm, mit seitlichen Flanken, die unter einem Winkel (α) von 20° bis 40°, insbesondere 25° bis 35°, relativ zu einer Senkrechten zum Basisniveau (8) verlaufen, und mit einer Höhe (h₃ₐ), die 0,35 mm bis 0,45 mm, insbesondere 0,40 mm, beträgt, aufweisen.

11. Fahrzeugreifen nach Anspruch 10, **dadurch gekennzeichnet, dass** das Muster (2, 2') Flächenelemente (6, 7; 11a, 11b) aufweist, welche mit Schraffuren aus Rippen (6a, 7a; 12a, 12b) versehen sind, die ausgehend vom Basisniveau (8) eine Höhe (h₆ₐ) aufweisen, die 0,25 mm bis 0,35 mm beträgt und um bis zu 0,15 mm geringer ist als die Höhe (h₃ₐ) der die Gitterlinien (3, 3') der Gitterstruktur bildenden Rippen (3a, 3'a) und die seitliche Rippenflanken aufweisen, die mit einer Senkrechten zum Basisniveau (8) einen Winkel (β) einschließen, welcher 20° bis 30° beträgt.

12. Fahrzeugreifen nach einem oder mehreren der Ansprüche 1 bis 11, **dadurch gekennzeichnet, dass** das Muster (2, 2') Flächenelemente (5, 11a, 11b) aufweist, welche mit Schraffuren aus Rippen (5a, 12a, 12b) versehen sind, die ausgehend vom Basisniveau (8) eine Höhe (h₅ₐ) aufweisen, die 0,15 mm bis 0,30 mm beträgt und um bis zu 0,20 mm geringer als die Höhe (h₃ₐ) der die Gitterlinien (3, 3') bildenden Rippen (3a, 3'a) und die seitliche Rippenflanken aufweisen, die mit einer Senkrechten zum Basisniveau (8) einen Winkel (γ) einschließen, welcher 40° bis 50° beträgt.

13. Fahrzeugreifen nach einem oder mehreren der Ansprüche 1 bis 12, **dadurch gekennzeichnet, dass** die Rippen (5a, 6a, 7a; 12a, 12b) der Schraffuren der Flächenelemente (5, 6, 7a; 11a, 11b) Spitzenbereiche aufweisen, deren Breite (b₃ₐ, b₅ₐ, b₆ₐ) in der Größenordnung von 0,10 mm beträgt.

14. Fahrzeugreifen nach einem oder mehreren der Ansprüche 1 bis 13, **dadurch gekennzeichnet, dass** das Muster (2, 2') Flächenelemente (5, 6, 7; 12a, 12b) aufweist, welche mit Schraffuren aus Rippen (5a, 6a, 7a; 12a, 12b) versehen sind, die am Basisniveau (8) einen gegenseitigen Abstand aufweisen, welcher in der Größenordnung von 0,10 mm beträgt, wobei in weiteren Flächenelementen (5, 6, 7; 12a, 12b), welche durch insbesondere kontinuierliche Vergrößerung und/oder Verkleinerung der gegenseitigen Abstände von Gitterlinien (3, 3') eine geänderte äußere Gestalt aufweisen, der gegenseitige Abstand entsprechend geringer oder größer ist.

## Claims

1. Vehicle tyre having a decorative pattern (2, 2') on at least one sidewall portion (1a), wherein the pattern (2, 2') has a multiplicity of surface elements (5, 6, 7; 9, 10, 10'; 11a, 11b), wherein surface elements (5, 6, 7; 11a, 11b) are present, which are provided with a hatching of ribs (5a, 6a, 7a; 12a, 12b), and wherein surface elements (5, 6, 7; 10, 10'; 11a, 11b) are provided, the hatching of which has a specific orientation relative to a specific direction that differs from the orientation of the hatching of other surface elements (5, 6, 7; 11a, 11b), likewise relative to this direction, wherein the pattern (2, 2') has a grid structure of grid lines (3, 3') which encircle surface elements (5, 6, 7; 9, 10, 10'; 11a, 11b), which in the circumferential direction of the sidewall portion (1a) change their outer shape by an in particular continuous increase and/or decrease in the mutual spacings of grid lines (3, 3') and/or by changing the course and/or the orientation of grid lines (3, 3') with respect to the circumferential direction and/or the radial direction,
**characterized**
**in that** the grid lines (3, 3') are formed by ribs (3a, 3'a), wherein all of the ribs (5a, 6a, 7a; 3a, 3'a; 12a, 12b) forming the hatchings or the grid lines (3, 3') proceed from a common base level (8).

2. Vehicle tyre according to Claim 1, **characterized in that** the surface elements (5, 6, 7; 9, 10, 10'; 11a, 11b) of the grid structure are regular and/or irregular polygons comprising straight or on the whole curved sides and having at least three corners, in particular are polygons having three to fourteen, preferably having up to eight corners.

3. Vehicle tyre according to Claim 1 or 2, **characterized in that** the grid structure over at least a part of the circumferential extent of the sidewall portion (1a) forms a surface-covering pattern (2, 2') which preferably consists of quadrangular surface elements (5, 6, 7; 11a, 11b) which are parallelograms, such as rectangles or quadrangles similar to rectangles, or rhomboids or quadrangles similar to rhomboids.

4. Vehicle tyre according to Claim 3, **characterized in that** the grid structure over at least one portion of the circumferential extent of the surface-covering pattern (2) forms a base pattern (4) which consists at least of first and of second surface elements (5, 6, 7), wherein the first surface elements (5, 6, 7) are in each case designed identically among one another, and wherein the second surface elements (5, 6, 7) are in each case designed identically among one another.

5. Vehicle tyre according to Claim 4, **characterized in that** the base pattern (4) is composed of the first, the second and third surface elements (5, 6, 7) which are parallelograms that are in each case of identical design and of identical size among one another, wherein in each case one first, one second and one third surface element (5, 6, 7) due to their mutual arrangement result in an oblique view of a cuboid projected into the plane.

6. Vehicle tyre according to Claim 5, **characterized in that** the first, second and third surface elements (5, 6, 7) are provided with hatchings which are largely identical or the same within the first, second and third surface elements (5, 6, 7), but differ from one another in terms of the orientation of the ribs (5a, 6a, 7a) forming the hatchings.

7. Vehicle tyre according to one of Claims 4 to 6, **characterized in that** the surface-covering pattern (2), proceeding from the base pattern (4) in the circumferential extent of the sidewall portion (1a), changes continuously in such a way that the surface elements (5, 6, 7) are narrowed in the radial direction along arcs extending obliquely over the sidewall portion (1a), wherein the surface-covering pattern (2), proceeding from the radially inner edge of the sidewall portion (1a), is correspondingly complemented for covering the sidewall portion (1a).

8. Vehicle tyre according to one or more of Claims 1 to 3, **characterized in that** the grid structure is a mesh-like structure and has irregularly wavy grid lines (3') in such a way that an overall wavy pattern (2') is present, which simulates a cloth blowing in the wind or a flag blowing in the wind.

9. Vehicle tyre according to Claim 8, **characterized in that** the surface elements (11a, 11b) in the mesh-like grid structure are polygons, in particular quadrangles, which are provided in a checkerboard manner with hatchings, the ribs (12a, 12b) of which have different orientations.

10. Vehicle tyre according to one or more of Claims 1 to 9, **characterized in that** the ribs (3a, 3'a) which form the grid lines (3, 3') of the grid structure have a substantially triangular cross section with tip regions having a width (b₃ₐ) of 0.10 mm to 0.25 mm, with lateral flanks which extend at an angle (α) of 20° to 40°, in particular 25° to 35°, relative to a perpendicular to the base level (8), and with a height (h₃ₐ) which is 0.35 mm to 0.45 mm, in particular 0.40 mm.

11. Vehicle tyre according to Claim 10, **characterized in that** the pattern (2, 2') has surface elements (6, 7; 11a, 11b)which are provided with hatchings of ribs (6a, 7a; 12a, 12b) that, proceeding from the base level (8), have a height (h₆ₐ) which is 0.25 mm to 0.35 mm and is up to 0.15 mm lower than the height (h₃ₐ) of the ribs (3a, 3'a) forming the grid lines (3, 3') of the grid structure, and that have lateral rib flanks which conjointly with a perpendicular to the base level (8) include an angle (β) which is 20° to 30°.

12. Vehicle tyre according to one or more of Claims 1 to 11, **characterized in that** the pattern (2, 2') has surface elements (5, 11a, 11b) which are provided with hatchings of ribs (5a, 12a, 12b) that, proceeding from the base level (8), have a height (h₅ₐ) which is 0.15 mm to 0.30 mm and is up to 0.20 mm lower than the height (h₃ₐ) of the ribs (3a, 3'a) forming the grid lines (3, 3'), and that have lateral rib flanks which conjointly with a perpendicular to the base level (8) include an angle (γ) which is 40° to 50°.

13. Vehicle tyre according to one or more of Claims 1 to 12, **characterized in that** the ribs (5a, 6a, 7a; 12a, 12b) of the hatchings of the surface elements (5, 6, 7a; 11a, 11b) have tip regions, the width (b₃ₐ, b₅ₐ, b₆ₐ) of which is in the order of magnitude of 0.10 mm.

14. Vehicle tyre according to one or more of Claims 1 to 13, **characterized in that** the pattern (2, 2') has surface elements (5, 6, 7; 12a, 12b), which are provided with hatchings of ribs (5a, 6a, 7a; 12a, 12b) which at the base level (8) have a mutual spacing which is in the order of magnitude of 0.10 mm, wherein, in further surface elements (5, 6, 7; 12a, 12b) which, due to an in particular continuous increase and/or decrease in the mutual spacings of grid lines (3, 3'), have a modified outer shape, the mutual spacing is correspondingly smaller or larger.

## Revendications

1. Pneumatique de véhicule comportant un motif décoratif (2, 2') sur au moins une partie de paroi latérale (1a), le motif (2, 2') comprenant une pluralité d'éléments de surface (5, 6, 7 ; 9, 10, 10' ; 11a, 11b), des éléments de surface (5, 6, 7 ; 11a, 11b) étant présents, lesquels sont dotés d'un hachurage de nervures (5a, 6a, 7a ; 12a, 12b), et des éléments de surface (5, 6, 7 ; 10, 10' ; 11a, 11b) étant prévus, dont les hachures présentent, par rapport à une direction déterminée, une orientation déterminée qui se distingue de l'orientation de hachures d'autres éléments de surface (5, 6, 7 ; 11a, 11b), également par rapport à cette direction, le motif (2, 2') présentant une structure de grille constituée de lignes de grille (3, 3') qui entourent des éléments de surface (5, 6, 7 ; 9, 10, 10' ; 11a, 11b), qui, dans la direction périphérique de la partie de paroi latérale (1a), ont une forme extérieure modifiée, par une augmentation et/ou une réduction en particulier continues des distances mutuelles des lignes de grille (3, 3') et/ou par une modification du tracé et/ou de l'orientation des lignes de grille (3, 3') par rapport à la direction périphérique et/ou à la direction radiale,
**caractérisé**
**en ce que** les lignes de grille (3, 3') sont formées par des nervures (3a, 3'a), toutes les nervures (5a, 6a, 7a ; 3a, 3'a ; 12a, 12b) formant les hachurages ou les lignes de grille (3, 3') partant d'un niveau de base commun (8).

2. Pneumatique de véhicule selon la revendication 1, **caractérisé en ce que** les éléments de surface (5, 6, 7 ; 9, 10, 10' ; 11a, 11b) de la structure en grille sont des polygones à au moins trois angles, réguliers et/ou irréguliers, présentant des côtés droits ou globalement courbes, notamment des polygones ayant de trois à quatorze angles, de préférence jusqu'à huit angles.

3. Pneumatique de véhicule selon la revendication 1 ou la revendication 2, **caractérisé en ce que** la structure en grille forme, sur au moins une partie de l'étendue périphérique de la partie de paroi latérale (1a), un motif (2, 2') couvrant la surface, qui est de préférence constitué d'éléments de surface quadrangulaires (5, 6, 7 ; 11a, 11b), qui sont des parallélogrammes, tels que des rectangles ou des quadrilatères de type rectangle, ou des losanges ou des quadrilatères de type losange.

4. Pneumatique de véhicule selon la revendication 3, **caractérisé en ce que** la structure de grille forme, sur au moins une partie de l'étendue périphérique du motif (2) couvrant la surface, un motif de base (4) qui est constitué au moins de premiers et de deuxièmes éléments de surface (5, 6, 7), les premiers éléments de surface (5, 6, 7) étant respectivement configurés de manière identique entre eux et les deuxièmes éléments de surface (5, 6, 7) étant respectivement configurés de manière identique entre eux.

5. Pneumatique de véhicule selon la revendication 4, **caractérisé en ce que** le motif de base (4) se compose des premier, deuxième et troisième éléments de surface (5, 6, 7), qui sont des parallélogrammes de même forme et de même taille, un premier, un deuxième et un troisième élément de surface (5, 6, 7) se traduisant chacun, de par leur disposition mutuelle, en une vue oblique d'un parallélépipède projeté dans le plan.

6. Pneumatique de véhicule selon la revendication 5, **caractérisé en ce que** les premier, deuxième et troisième éléments de surface (5, 6, 7) sont pourvus de hachurages qui coïncident ou sont identiques dans une large mesure à l'intérieur des premier, deuxième et troisième éléments de surface (5, 6, 7), mais qui diffèrent les uns des autres en ce qui concerne l'orientation des nervures (5a, 6a, 7a) formant les hachurages.

7. Pneumatique de véhicule selon l'une des revendications 4 à 6, **caractérisé en ce que** le motif (2) couvrant la surface se modifie en continu à partir du motif de base (4) dans l'étendue périphérique de la partie de paroi latérale (1a) de telle sorte que les éléments de surface (5, 6, 7) sont rétrécis selon la direction radiale le long d'arcs s'étendant obliquement sur la partie de paroi latérale (1a), le motif (2) couvrant la surface étant complété de manière correspondante en partant du bord radialement intérieur de la partie de paroi latérale (1a) pour couvrir la partie de paroi latérale (1a).

8. Pneumatique de véhicule selon une ou plusieurs des revendications 1 à 3, **caractérisé en ce que** la structure de grille est une structure réticulaire et présente des lignes de grille (3') s'étendant de manière irrégulière et ondulée, de telle sorte qu'il existe un motif (2') s'étendant globalement de manière ondulée, qui simule un tissu ou un drapeau ondulant.

9. Pneumatique de véhicule selon la revendication 8, **caractérisé en ce que** les éléments de surface (11a, 11b) dans la structure réticulaire sont des polygones, en particulier des quadrilatères, qui sont pourvus de hachurages en forme de damier, dont les nervures (12a, 12b) présentent des orientations différentes.

10. Pneumatique de véhicule selon une ou plusieurs des revendications 1 à 9, **caractérisé en ce que** les nervures (3a, 3'a) qui forment les lignes de grille (3, 3') de la structure de grille ont une section transversale essentiellement triangulaire avec des zones de pointe ayant une largeur (b₃ₐ) allant de 0,10mm à 0,25mm, avec des flancs latéraux qui s'étendent selon un angle (α) de 20° à 40°, en particulier de 25° à 35°, par rapport à une perpendiculaire au niveau de base (8), et avec une hauteur (h₃ₐ) qui va de 0,35mm à 0,45mm, en particulier qui est de 0,40mm.

11. Pneumatique de véhicule selon la revendication 10, **caractérisé en ce que** le motif (2, 2') comporte des éléments de surface (6, 7 ; 11a, 11b) qui sont pourvus de hachurages constitués de nervures (6a, 7a ; 12a, 12b) qui, à partir du niveau de base (8), ont une hauteur (h₆ₐ) qui est de 0,25mm à 0,35mm et qui est inférieure de jusqu'à 0,15mm à la hauteur (h₃ₐ) des nervures (3a, 3'a) formant les lignes de grille (3, 3') de la structure de grille et qui ont des flancs de nervure latéraux qui forment un angle (β) avec une perpendiculaire au niveau de base (8) qui est de 20° à 30°.

12. Pneumatique de véhicule selon une ou plusieurs des revendications 1 à 11, **caractérisé en ce que** le motif (2, 2') comprend des éléments de surface (5, 11a, 11b) munis de hachurages de nervures (5a, 12a, 12b) ayant une hauteur (h₅ₐ), à partir du niveau de base (8), qui est de 0,15mm à 0,30mm et inférieure à jusqu'à 0,20mm à la hauteur (h₃ₐ) des nervures (3a, 3'a) formant les lignes de grille (3, 3') et qui présentent des flancs latéraux de nervures qui forment un angle (γ) de 40° à 50° avec une perpendiculaire au niveau de base (8).

13. Pneumatique de véhicule selon une ou plusieurs des revendications 1 à 12, **caractérisé en ce que** les nervures (5a, 6a, 7a ; 12a, 12b) des hachurages des éléments de surface (5, 6, 7a ; 11a, 11b) présentent des zones de sommet dont la largeur (b₃ₐ, b₅ₐ, b₆ₐ) est de l'ordre de 0,10mm.

14. Pneumatique de véhicule selon une ou plusieurs des revendications 1 à 13, **caractérisé en ce que** le motif (2, 2') comprend des éléments de surface (5, 6, 7 ; 12a, 12b) qui sont pourvus de hachurages de nervures (5a, 6a, 7a ; 12a, 12b) qui présentent au niveau de la base (8) une distance mutuelle qui est de l'ordre de 0,10mm, dans lequel dans d'autres éléments de surface (5, 6, 7 ; 12a, 12b), qui présentent une forme extérieure modifiée en raison d'une augmentation et/ou d'une diminution en particulier continues des distances mutuelles des lignes de grille (3, 3'), la distance mutuelle étant en conséquence plus faible ou plus grande.
